Europäisches Patentamt

**European Patent Office**

**Office européen des brevets**

(11) Publication number: **0 030 820**
**A1**

# EUROPEAN PATENT APPLICATION

(21) Application number: **80304362.9**

(22) Date of filing: **03.12.80**

(51) Int. Cl.³: **F 16 K 17/16**

(30) Priority: **13.12.79 GB 7942938**

(43) Date of publication of application:
**24.06.81 Bulletin 81/25**

(84) Designated Contracting States:
**DE FR GB**

(71) Applicant: **ELECTROFABRICATION & ENGINEERING COMPANY LIMITED**
**Gloucester Road West Chirton Industrial Estate**
**North Shields Tyne & Wear, NE29 8RQ(GB)**

(72) Inventor: **Bush, Michael Edward**
**7 Melbourne Crescent**
**Whitley Bay Tyne & Wear(GB)**

(74) Representative: **Sanderson, Michael John et al,**
**MEWBURN ELLIS & CO 70 & 72 Chancery Lane**
**London WC2A 1AD(GB)**

(54) Safety pressure relief device.

(57) A safety pressure relief device for mounting on a pressure vessel includes a flat disc (2) of a frangible material such as resin-impregnated graphite clamped between axially aligned inlet and outlet support members (4,6) to seal the bores (8,10) through said members (4,6) from one another. One or more grooves (12) are carefully machined into one or both of the surfaces of said disc (2) to be symmetrically located about the central axis of the device. The critical bursting pressure of the disc (2) when the greater pressure is applied to one surface of the disc (2) being closely related to the depth of the groove (12) formed in the other surface.

FIG. 1

EP 0 030 820 A1

- 1 -

IMPROVEMENTS IN OR RELATING TO SAFETY PRESSURE
RELIEF DEVICES

TECHNICAL FIELD

This invention relates to safety pressure relief
devices used to protect pressure vessels, and more
particularly to such devices incorporating bursting
discs.

BACKGROUND ART

It is established practice to utilise flat discs
of resin-impregnated graphite as the bursting member
of a safety pressure relief device, the internal
surface of the disc sealing an inlet bore of the
device in communication with the interior of the
vessel the pressure in which is to be monitored. The
bursting disc is chosen such that, when the pressure
differential across the disc reaches a predetermined
maximum value, the disc bursts to vent the vessel.

Such discs are commonly required to have a
two-way action whereby bursting occurs either when
the pressure differential across the disc reaches a
first predetermined value with the pressure within
the vessel greater than that outside the vessel - i.e.
forward bursting - or when the pressure differential
across the disc reaches a further predetermined value
with the pressure within the vessel less than that
outside the vessel - i.e. reverse bursting. It is

- 2 -

usual for said first and further predetermined values for effecting forward and reverse bursting respectively to be different, and, in order for the same disc to be used for the two purposes, it has heretofore been necessary either to make the effective areas of the opposed surfaces of the disc different from one another by reducing as necessary the diameter of one or other of the inlet and outlet bores of the device compared with the other of the inlet and outlet bores, or to fit a vacuum support dial overlying one side of the disc.

Clearly any difference in the diameters of the inlet and outlet bores, or the presence of a vacuum support dial within the device can seriously reduce the venting rate of the system on bursting of the disc.

DISCLOSURE OF THE INVENTION

According to the present invention there is provided a safety pressure relief device for use on a pressure vessel, the device comprising axially aligned annular inlet and outlet support members between which are clamped the peripheral regions of a flat bursting disc of a frangible material, characterised in that one or more grooves are machined in at least one surface of the disc, said groove(s) being located symmetrically of the central axis of the device.

In such a device incorporating a bursting disc only one surface of which is grooved it is found that, with the greater pressure applied to the grooved surface, the bursting pressure of the disc remains substantially constant over a substantial range of depths of the groove, said bursting pressure being less than that for an equivalent, non-grooved disc.

However, with the greater pressure applied to the non-grooved surface of such a disc, the bursting pressure of the disc is very sensitive to, and dependent upon, the depth of the groove in the opposite surface, said bursting pressure being less than that in the opposite direction.

Further, if grooves are machined in both surfaces of a disc, it is found that the groove in the surface opposite to that on which the greater pressure is being applied is dominant in determining the bursting pressure of the disc in that direction - the deeper said groove in the opposite surface, the lower is the bursting pressure of the disc in that direction.

Thus it will be appreciated that a disc can be carefully machined to provide one or more grooves of controlled depth in one or both surfaces thereof in such a manner that said disc will burst at different, controlled pressures in the forward and reverse directions.

Such an arrangement enables different bursting pressures in the forward and reverse directions to be

- 4 -

achieved in safety pressure relief devices having inlet and outlet bores of the same diameter and without the use of vacuum support dials, thus eliminating the restriction on venting that can occur in the aforementioned prior art devices. However grooved discs may be used in conjunction with inlet and outlet support members of different internal diameters.

In a preferred safety pressure relief device the internal diameters of the inlet and outlet support members are identical, the disc having an annular groove formed in the surface of the disc opposite to that to be subjected to the pressure within the vessel, said groove having a mean diameter substantially equal to the internal diameter of the outlet support member.

The transverse section of the or each groove preferably includes at least one angular portion conveniently at or adjacent the base of the groove and said transverse section may be V shape, square shape or rectangular shape.

At burst, failure of the disc takes place around a line defined by the base of the groove, the bores through the inlet and outlet support members being fully opened on bursting of the disc to permit full-bore discharge from an overpressurised vessel.

A preferred disc is of resin-impregnated graphite,

although other frangible materials may be used.

BRIEF DESCRIPTION OF THE DRAWINGS

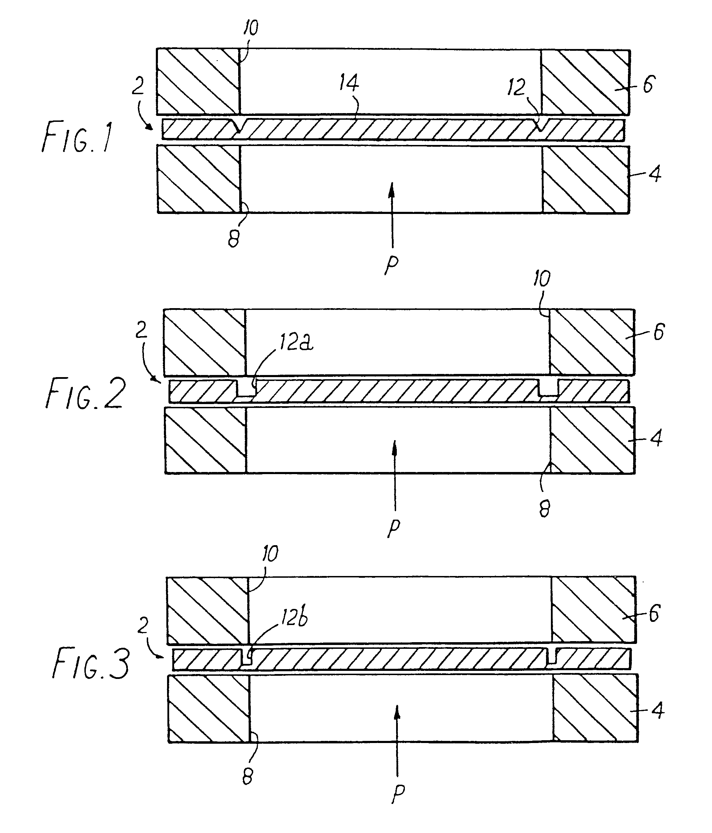

Figs. 1 to 3 illustrate three examples of safety pressure relief devices according to the invention.

BEST MODE OF CARRYING OUT THE INVENTION

Referring to Fig. 1 of the drawings, a resin-impregnated graphite bursting disc is indicated generally at 2 and is mounted between axially aligned annular inlet and outlet support rings 4,6 respectively, the bores 8,10 through which are of the same diameter.

An annular groove 12 of generally V-shape in transverse section is formed in the surface 14 of the disc 2 remote from the interior of the vessel on which the device is to be mounted. The groove is symmetrically located in the disc so that the diameter of the base thereof corresponds with that of the bores 8,10 of the rings 4,6 and the disc is positioned with the base of the groove 12 axially aligned with the inner faces of the inlet and outlet rings 4,6 - i.e. directly below the inner face of the outlet support ring 6.

The thickness of the disc 2 and the depth of the groove 12 carefully machined in the disc 2 are chosen such that the critical pressure at which the disc will fracture in the forward direction - i.e. with higher pressure P to the inlet side of the disc - is equal to a desired value, while the critical pressure at which the disc will fracture in the reverse direction - i.e.

with higher pressure to the outlet side of the disc - is equal to a desired higher value.

The illustrated disc thus has a controlled two-way action and provides full-bore relief from the over- or under-pressurised system, in that the disc fractures about the base of the groove 12 and fully opens the inlet and outlet bores 8,10 which form continuations one of the other.

As mentioned above, the critical pressure of the disc in the forward direction, with the pressure P within the vessel greater than that outside the vessel, is closely related to the depth of the groove as well as being dependent upon the thickness of the disc 2 and the diameter of the bore 8. However the critical pressure of the disc in the reverse direction is substantially independent of the depth of the groove 12, being more closely related to the thickness of the disc and the diameter of the bore 10. Thus, by choosing appropriate values of disc thickness and notch depth and by orientating the disc 2 correctly within its holder, it is possible to achieve any desired combination of forward and reverse bursting pressures.

Although the precise depth of the groove 12 is critical to the bursting pressure of the disc when the greater pressure is applied to the opposite surface of the disc, it is found that the width and transverse configuration of the groove can be varied within certain limits without altering the bursting pressure of the disc.

If the internal diameter of the inlet and outlet support rings 4,6 is 100mm, a 2.3mm thick disc of resin-impregnated graphite in which is machined a 100mm diameter groove 12 of V-shaped transverse section having a depth of 2.0mm located with its grooved surface to the outlet side of the device results in a device having a forward bursting pressure - i.e. in the direction of the arrow P - of $0.27\text{kgm/cm}^2$ and a reverse bursting pressure of $0.60\text{kgm/cm}^2$.

Figs. 2 and 3 show alternative discs 2 in which the grooves 12a and 12b are square and rectangular respectively in transverse section, the effects of such grooves being substantially as described with reference to Fig. 1.

As mentioned above, for a given configuration of groove, the depth thereof is the crucial factor in determining the bursting pressure when the greater pressure is incident on the non-grooved surface of the disc, the width and the precise transverse sectional shape being capable of being varied quite substantially without affecting the critical pressure.

However, it is preferred that the cross-sectional shape of a groove includes an angular portion therein preferably located at or adjacent the base of the groove to constitute a predetermined starting-point for fracture of the disc.

If a disc is grooved on both inlet and outlet surfaces, it is again found that, for any given total groove depth, the bursting pressure with greater pressure applied to one surface of the disc is influenced sensitively by the depth of the groove in the other surface of the disc.

The grooves may be linear and may extend, for example, radially or diametrically of the disc surface instead of, or as well as, being circular as detailed above - more than one groove may be formed in a or each surface of the disc as required, provided the grooves on any one surface of the disc, when considered in total, are symmetrically disposed about the axial centreline of the device with the disc in its operative position.

- 9 -

CLAIMS

1. A safety pressure relief device for use on a pressure vessel, the device comprising axially aligned annular inlet and outlet support members (4,6) between which are clamped the peripheral regions of a flat bursting disc (2) of a frangible material, characterised in that one or more grooves (12) are machined in at least one surface of the disc (2), said groove(s) (12) being located symmetrically of the central axis of the device.

2. A safety pressure relief device as claimed in claim 1 in which the internal diameters of the inlet and outlet support members (4,6) are identical, the disc (2) having an annular groove (12) formed in the surface of the disc (2) opposite to that to be subjected to the pressure (P) within the vessel, said groove (12) having a mean diameter substantially equal to the internal diameter of the outlet support member.

3. A safety pressure relief device as claimed in claim 1 or claim 2 in which the transverse section of the or each groove (12) includes at least one angular portion.

4. A safety pressure relief device as claimed in claim 3 in which the or each groove (12) is V-shaped, square (12a) or rectangular (12b) in transverse section.

5. A safety pressure relief device as claimed in any one of claims 1 to 4 in which the material of the disc (2) is resin-impregnated graphite.

FIG.1

FIG.2

FIG.3

## European Patent Office — EUROPEAN SEARCH REPORT

Application number

EP 80 30 4362.9

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - C - 864 497 (F. BOUCHER) <br> * page 3, lines 2 to 6; fig. 4, 8 * <br> -- | 1-4 | F 16 K 17/16 |
| | US - A - 2 576 431 (G.E. WHITE) <br> * fig. 1 to 5 * <br> -- | 1-4 | |
| | US - A - 2 553 267 (A.R. NEDOH) <br> * fig. 3 to 6 * <br> -- | 1-4 | |
| | GB - A - 1 516 216 (E. ANDREWS et al.) <br> * fig. 1 * <br> -- | 1 | TECHNICAL FIELDS SEARCHED (Int. Cl.³) |
| | DE - A - 1 806 797 (BLACK, SIVALLS & BRYSON) <br> * fig. 6, 7 * <br> -- | 1 | F 16 K 17/00 |
| | DE - A - 2 143 939 (SIGRI) <br> * page 1, lines 16 to 20 * <br> -- | 5 | |
| A | GB - A - 1 138 885 (CARBONE-LORRAINE) <br> -- | | |
| A | CH - A - 166 300 (ICI) <br> ---- | | CATEGORY OF CITED DOCUMENTS |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| Berlin | 26-02-1981 | SCHLABBACH |

EPO Form 1503.1 06.78